# EUROPÄISCHE PATENTSCHRIFT

(11) **EP 1 381 469 B1**
(45) Veröffentlichungstag und Bekanntmachung des Hinweises auf die Patenterteilung: **11.04.2007**
(21) Anmeldenummer: 02713990.6
(22) Anmeldetag: 22.04.2002
(51) Int. Cl.: B03C 3/16, B01D 50/00

(54) **VORRICHTUNG UND VERFAHREN ZUR REINIGUNG VON SCHADSTOFFBELASTETER ABLUFT**
DEVICE AND METHOD FOR PURIFYING OUTGOING AIR WHICH IS LOADED WITH CONTAMINANTS
DISPOSITIF ET PROCEDE POUR EPURER DES REJETS GAZEUX CHARGES DE POLLUANTS

(30) Priorität: 24.04.2001 CH 751012001
(43) Veröffentlichungstag der Anmeldung: 21.01.2004
(73) Patentinhaber: KOENIG AG, CH-8587 Oberaach (CH)
(72) Erfinder: HUNDSDÖRFER, Markus, Hans, Ulrich, 78462 Konstanz (DE)
(74) Vertreter: Clerc, Natalia
(86) Internationale Anmeldenummer: PCT/CH2002/000220
(87) Internationale Veröffentlichungsnummer: WO 2002/085524

(56) Entgegenhaltungen:
- EP-A- 1 075 872
- WO-A-92/19380
- GB-A- 2 036 951
- US-A- 3 064 409
- US-A- 3 874 858
- US-A- 5 846 301

## Beschreibung

Die vorliegende Erfindung betrifft eine Vorrichtung und ein Verfahren zur Reinigung von schadstoffbelasteter Abluft gemäss Oberbegriff der Patentansprüche 1 respektive 8. Diese Vorrichtung und dieses Verfahren eignen sich insbesondere zur Reinigung von bei der Textilherstellung und -verarbeitung entstehenden Abluft, insbesondere der Abluft eines Spannrahmens.

Textile Abluft ist sehr problematisch zu reinigen, da sich in der Abluft Wachse, Öle und meist auch Fasern befinden, die, einmal abgeschieden, oft sehr schwer aus Filtereinheiten auszutragen sind. Es sind verschiedene Luftwäscher bekannt, beispielsweise Rotationswäscher oder Wirbelwäscher, in welchen die Abluft durch grosse Mengen zirkulierenden Abwassers gewaschen wird. Die Reinigungsleistung dieser mechanischen Wäscher ist jedoch oft nicht ausreichend, da die Abscheidung nur bis zu einer Tropfengrösse von circa 10 - 20 µm möglich ist. In der Textilherstellung und -verarbeitung entsteht jedoch ein sogenannter blauer Rauch, welcher sich aufgrund der geringen Grösse der Schadstoffe mittels herkömmlicher Wäscher nicht reinigen lässt. Dieser blaue Rauch spielt bei der VOC Belastung eine geringe Rolle. Seine Reduktion ist jedoch trotzdem wünschenswert, stehen doch viele Textilbetriebe in dicht besiedelten Gebieten.

Deshalb werden vermehrt Elektrofilter eingesetzt, welche Schadstoffpartikel in der Abluft ionisieren und an in Strömungsrichtung nachfolgend angeordneten elektrisch geladenen Kollektorplatten ablagern. Zwar ermöglichen diese Elektrofilter auch die Entfernung von kleinsten Schadstoffpartikeln und somit auch die Reinigung des blauen Rauches. Nachteilig ist jedoch, dass sich die Schmutzpartikel an den Kollektorplatten ablagern, so dass diese häufig im Wochenrhythmus gereinigt werden müssen. Die im Textilbereich anfallenden Verschmutzungen sind zudem derart, dass eine einfache Spülung der Kollektorplatten im eingebauten Zustand nicht ausreicht. Die Platten müssen somit entfernt und die Anlage während dieser Wartungsarbeit stillgelegt werden.

US-A-3'874'858 offenbart eine Vorrichtung zum Reinigen eines Gasstroms, bei welcher das Gas vor Einleitung in einen Wäscher oder Skrubber ionisiert wird. Auch hier lagern sich mindestens ein Teil der Schmutzpartikel im Körper des Wäschers selber ab, so dass die Reinigung entsprechend aufwendig ist.

Ferner sind aus EP-A-1'075'874 und WO 92/19380 Elektrofilter bekannt, in welchen die Abluft mit den ionisierten Schmutzpartikeln mit einer Flüssigkeit besprüht und anschliessend auf einer Kollektorplatte aufgefangen werden. Die Kollektorplatte muss entsprechend regelmässig gereinigt werden.

US-A-5'846'301 beschreibt eine Vorrichtung zur Reinigung eines Gasstroms, bei welchem das Gas ebenfalls ionisiert und mit einem alkalischen Reaktionsmittel berieselt wird. Dabei fallen die Tröpfchen entgegen der Strömungsrichtung des Gases nach unten in einen Übergangskanal, von wo das Reaktionsmittel zur Wiederverwendung in einen Vorratstank abgezogen wird. Nachteilig ist hier, dass ein Reaktionsmittel verwendet wird. Zudem ist der Übergangskanal ebenfalls vom Gas durchströmt. Bei einer positiven Veränderung des Verschmutzungsgrades des nachströmenden Gases wird nun sauberes Gas vom schmutzigen Nebel kontaminiert.

Dies vermindert den Gesamtwirkungsgrad der Anlage.

US-A-3'064'409 offenbart eine Vorrichtung, bei welcher einem Nassreiniger ein Elektrofilter mit Kollektorplatte vorgeschaltet ist.

Es ist deshalb Aufgabe der Erfindung, eine Vorrichtung und ein Verfahren zur Reinigung von schadstoffbelasteter Abluft zu schaffen, welche eine hohe Reinigungsleistung mit geringem Wartungsaufwand ermöglichen.

Diese Aufgabe wird durch eine Vorrichtung und ein Verfahren mit den Merkmalen des Anspruches 1 beziehungsweise 8 gelöst.

Erfindungsgemäss wird ein Filter verwendet, in welchem in der Abluft enthaltene Schadstoffe ionisiert werden, die Abluft mit einem Sprühnebel beaufschlagt wird, um die ionisierten Schadstoffe an Nebeltröpfchen anzulagern, und die schadstoffbehafteten Nebeltröpfchen in einem in Strömungsrichtung nachgeordneten, vorzugsweise mechanischen Tropfenabscheider abgeschieden werden.

Die elektrisch neutralen oder nur schwach geladenen Nebeltröpfchen bilden einen Kollektor für die ionisierten Schadstoffe, welche sich an diesen anlagern. Durch die Anhaftung der ionisierten Schadstoffe an die Nebeltröpfchen vergrössern sich Masse und Volumen, so dass sich die Schadstoffe am Tropfenabscheider abfangen und aus der Abluft abscheiden lassen. Kleinste Schmutzpartikel und Schmutztropfen lassen sich somit aus der Abluft entfernen, insbesondere lässt sich der blaue Rauch vermindern.

Da sich die Schadstoffe jedoch nicht am Tropfenabscheider ablagern, sondern mit den Nebeltröpfchen vom Tropfenabscheider abfliessen, muss dieser kaum gereinigt werden. Vorteilhaft ist ferner, dass die Kontamination der Abluft in der Anlage kontinuierlich abnimmt.

Um einen optimalen Wirkungsgrad zu erzielen ist es notwendig, dass die Schadstoffe in Form von Partikeln und/oder Tropfen vorliegen. Je nach Temperatur und Zusammensetzung der Abluft ist es deshalb sinnvoll, diese vor der Ionisierung zu kühlen.

Weitere vorteilhafte Ausführungsformen gehen aus den abhängigen Ansprüchen hervor.

Im folgenden wird der Erfindungsgegenstand anhand von Ausführungsbeispielen, welche in der beiliegenden Zeichnung dargestellt sind, näher erläutert. Es zeigen
Figur 1 eine schematische Darstellung einer nicht-erfindungsgemässen Vorrichtung und
Figur 2 gemäss der Erfindung.

Die erfindungsgemässe Reinigungsvorrichtung befindet sich vorzugsweise in einem Abluftkanal einer Produktionsanlage, beispielsweise in einem Abluftkanal eines textilen Spannrahmens oder einer Extrusionsanlage. Im allgemeinen befindet sie sich in einem rohrförmigen Kanal K, welcher vorzugsweise liegend, aber auch stehend angeordnet sein kann.

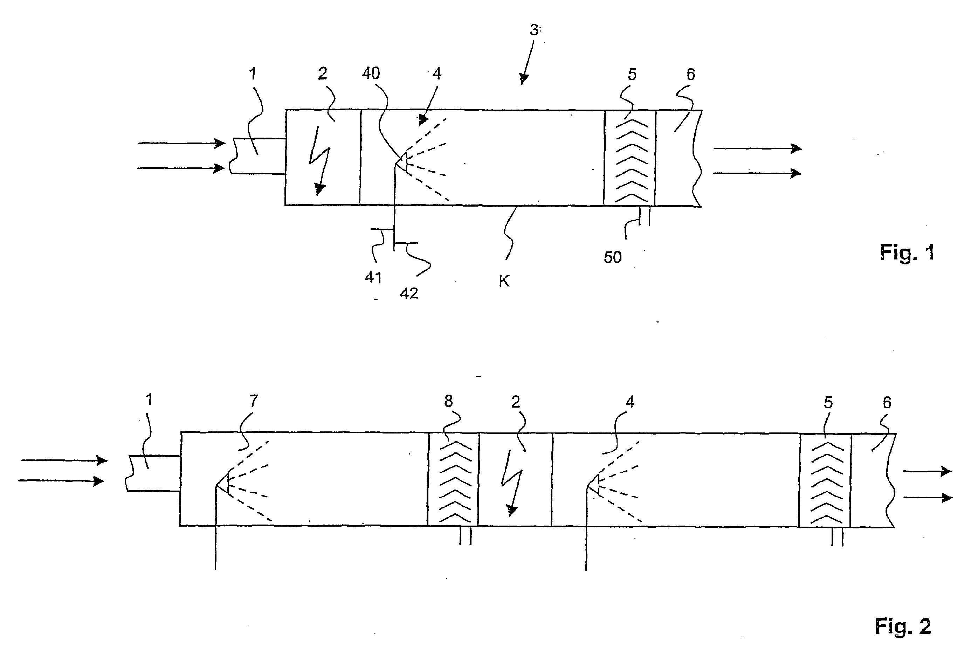

Durch eine Eintrittsöffnung 1 gemäss Figur 1 gelangt schadstoffbelastete Abluft in eine Ionisierungseinheit 2. Die Strömungsrichtung ist in den Figuren mit Pfeilen dargestellt. Die Abluft wird im allgemeinen mittels eines hier nicht dargestellten, üblicherweise nach der Reinigungsvorrichtung angeordneten Gebläses angesaugt. Als Ionisierungseinheit 2 eignen sich im Prinzip alle bekannten, in Elektrofiltern eingesetzten Ionisierungseinheiten. Vorzugsweise wird eine Spannung von mindestens annähernd -14kV angelegt, um mindestens einen Teil der in der Abluft enthaltenen Schmutzpartikel oder Schmutztröpfchen negativ zu laden.

In Strömungsrichtung nachgeordnet ist eine Kollektoreinheit 3 vorhanden, welche im wesentlichen aus einem Mittel zur Erzeugung eines Nebels 4 und einen nachgeordneten Tropfenabscheider 5 besteht. Der Nebel wird in dem hier beschriebenen Ausführungsbeispiel mittels mindestens einer Wasserdüse 40 erzeugt. Handelt es sich um eine Einstoffdüse, so ist die Düse mit einem Wasseranschluss 41 versehen. Handelt es sich um eine Zweistoffdüse, welche Luft und Wasser kombiniert, so ist ferner ein Druckluftanschluss 42 vorhanden. Im Falle der Einstoffdüse beträgt der Wasserdruck vorzugsweise 10-20 bar, bei einer Zweistoffdüse vorzugsweise 4-6 bar. Typische mittlere Tröpfchendurchmesser liegen bei 10-20 µm. Die Wassertemperatur beträgt beispielsweise mindestens annähernd 20°C. Vorzugsweise ist die Düse 40 so angeordnet, dass sie einen Nebel im Gleichstrom mit dem Strom der Abluft erzeugt.

Beabstandet zur Düse 40 und ihr nachfolgend ist der Tropfenabscheider 5 angeordnet. Der Abstand ist genügend gross gewählt, um eine Anlagerung der ionisierten Schadstoffe an die Nebeltröpfchen zu ermöglichen. Typische Werte betragen 2-4 m. Als Tropfenabscheider 5 eignen sich insbesondere Lamellenabscheider, vorzugsweise mit einer Abscheidgrenze von 10-20 µm. An diesem Tropfenabscheider 5 scheiden sich die Nebeltröpfchen ab und mit ihnen die angehafteten Schadstoffe. Die Nebeltröpfchen und Schadstoffe fliessen am Tropfenabscheider 5 ab und werden über einen Ablauf 50 abgeführt. Die gereinigte Abluft verlässt die Reinigungsvorrichtung über eine Austrittöffnung 6 und wird im allgemeinen über einen Kamin abgeführt.

Je nach Produktionsbetrieb weist die Abluft eine relativ hohe Temperatur auf. Die Abluft eines textilen Spannrahmens beträgt beispielsweise ungefähr 120°-200°C. Optimale Wirkungsgrade werden jedoch dann erzielt, wenn die Schadstoffe in Form von Partikeln oder Tröpfchen in der Abluft vorliegen. Deshalb ist es vorteilhaft, die Abluft vor Eintritt in die Ionisierungseinheit in einer Kühleinheit zu kühlen. Ferner ist es vorteilhaft, die Abluft in einer Vorreinigungseinheit von grösseren Schmutzpartikeln zu befreien.

In der erfindungsgemäßen Ausführungsform gemäss Figur 2 erfolgt die Kühlung und Vorreinigung in einer gemeinsamen Einheit, welche der Ionisierungseinheit vorgelagert ist. Diese Vorreinigungseinheit besteht im wesentlichen aus einem Luftwäscher oder aus einem Wärmetauscher, in welchem die Luft soweit gekühlt wird, das die Schadstoffe kondensieren. In Figur 2 ist die Variante mit dem Luftwäscher dargestellt. Er besteht im wesentlichen aus mindestens einer zweiten Wasserdüse 7 zur Zerstäubung von eingeführtem Wasser in einen zweiten Sprühnebel und einen zweiten Tropfenabscheider 8. Dadurch lässt sich die Abluft vorreinigen und des weiteren auf eine gewünschte Temperatur kühlen. Vorzugsweise beträgt die Temperatur anschliessend 50°-80° C.

Dank der erfindungsgemässen Vorrichtung und dem Verfahren lässt sich eine Abscheideleistung von organischen Kohlenstoffen von bis zu 75% erzielen. Ausserdem wird der blaue Rauch weitgehend eliminiert. Trotzdem müssen keine Filter oder Kollektorplatten gereinigt werden, da die Schadstoffe mit dem Wasser über die Tropfenabscheider abgeführt werden.

## Patentansprüche

1. Vorrichtung zur Reinigung von schadstoffbelasteter Abluft, wobei die Vorrichtung eine Ionisierungseinheit (2) zur Ionisation von in der Abluft enthaltenen Schadstoffen und eine Kollektoreinheit (4, 5) zur Abscheidung der ionisierten Schadstoffe aus der Abluft aufweist, wobei die Kollektoreinheit ein Mittel zur Erzeugung eines Nebels (4) zwecks Behaftung der ionisierten Schadstoffe an Nebeltröpfchen und einen in Strömungsrichtung der Abluft nachfolgend angeordneten ersten Tropfenabscheider (5) zur Abscheidung der schadstoffbehafteten Nebeltröpfchen aufweist, **dadurch gekennzeichnet, dass** der Ionisierungseinheit (2) eine Kühl- und/oder Vorreinigungseinheit vorgeschalten ist und dass die Kühl- und/oder Vorreinigungseinheit eine zweite Wasserdüse (7) zur Zerstäubung von eingeführtem Wasser in einen Sprühnebel und einen zweiten Tropfenabscheider (8) aufweist.

2. Vorrichtung nach Anspruch 1, **dadurch gekennzeichnet, dass** das Mittel zur Erzeugung eines Nebels eine erste Wasserdüse (4) ist.

3. Vorrichtung nach Anspruch 1, **dadurch gekennzeichnet, dass** die Kühl- und/oder Vorreinigungseinheit einen Wärmetauscher aufweist.

4. Vorrichtung nach Anspruch 1, **dadurch gekennzeichnet, dass** der erste Tropfenabscheider (5) ein mechanischer Abscheider ist.

5. Vorrichtung nach Anspruch 4, **dadurch gekennzeichnet, dass** der mechanische Abscheider eine Abscheidgrenze von 10-20 µm aufweist.

6. Vorrichtung nach Anspruch 2, **dadurch gekennzeichnet, dass** die Wasserdüse eine Zweistoff- oder Einstoffdüse ist.

7. Vorrichtung nach Anspruch 1, **dadurch gekennzeichnet, dass** das Mittel zur Vernebelung Nebeltröpfchen mit einem durchschnittlichen Durchmesser von 10-20 µm erzeugt.

8. Verfahren zur Reinigung von schadstoffbelasteter Abluft in einer Vorrichtung nach Ansprüchen 1-7, wobei die Abluft durch eine Ionisiereinheit (2) geleitet wird, um in der Abluft enthaltene Schadstoffe zu ionisieren, und wobei die ionisierten Schadstoffe in einer Kollektoreinheit (4, 5) aus der Abluft abgeschieden werden, wobei die Abluft in der Kollektoreinheit (4, 5) mit einem Nebel beaufschlagt wird, in welchem sich die ionisierten Schadstoffe an Nebeltröpfchen anhaften, und wobei die schadstoffbehafteten Nebeltröpfchen an einem Tropfenabscheider (5) aus der Abluft abgeschieden werden, **dadurch gekennzeichnet, dass** vor der Ionisierung die Abluft soweit gekühlt wird, dass die Schadstoffe kondensieren und dass die Abluft vor der Ionisierung vorgereinigt wird.

9. Verfahren nach Anspruch 8, **dadurch gekennzeichnet, dass** die schadstoffbelastete Abluft bei Eintritt in die Ionisierungseinheit (2) eine Temperatur aufweist, in welcher mindestens ein Teil der Schadstoffe in Form von Tropfen und/oder Partikeln vorliegen.

## Claims

1. Device for purifying outgoing air which is loaded with contaminants, said device comprising an ionization unit (2) for ionizing contaminants contained in the outgoing air and a collector unit (4, 5) for separating the ionized contaminants from the outgoing air, wherein the collector unit comprises a mist generating means (4) so that the ionized contaminants can adhere to droplets of the mist, and a first mist collector (5), subsequently arranged in the direction of the flow of the outgoing air, which is used for separating the droplets of mist having contaminants adhered thereto, **characterized in that** a cooling and/or pre-purification unit is arranged upstream of the ionization unit (2) and **in that** the cooling and/or pre-purification unit comprises a second water nozzle (7), which is used to atomize supplied water into a spray mist, and a second mist collector (8).

2. Device according to Claim 1, **characterized in that** the mist generating means is a first water nozzle (4).

3. Device according to Claim 1, **characterized in that** the cooling and/or pre-purification unit comprises a heat exchanger.

4. Device according to Claim 1, **characterized in that** the first mist collector (5) is a mechanical separator.

5. Device according to Claim 4, **characterized in that** the mechanical separator has a separation limit of 10-20 µm.

6. Device according to Claim 2, **characterized in that** the water nozzle is a two-fluid or single fluid nozzle.

7. Device according to Claim 1, **characterized in that** the nebulizing means generates droplets of mist having an average diameter of 10-20 µm.

8. Method for purifying outgoing air which is loaded with contaminants in a device according to Claims 1-7, wherein the outgoing air is passed through an ionization unit (2) in order to ionize contaminants contained in the outgoing air, and wherein the ionized contaminants are separated from the outgoing air in a collector unit (4, 5), where the outgoing air in the collector unit (4, 5) is charged with a mist, in which the ionized contaminants adhere to droplets of mist, and where the droplets of mist having contaminants adhered thereto are separated from the outgoing air on a mist collector (5), **characterized in that**, prior to the ionization, the outgoing air is cooled until the contaminants condense and **in that** the outgoing air is pre-purified prior to the ionization.

9. Method according to Claim 8, **characterized in that**, upon entry into the ionization unit (2), the outgoing air which is loaded with contaminants has a temperature at which at least part of the contaminants are present in the form of drops and/or particles.

## Revendications

1. Dispositif d'épuration d'air pollué chargé en substances nocives, le dispositif présentant une unité d'ionisation (2) qui ionise les substances nocives présentes dans l'air pollué et une unité de collecte (4, 5) qui sépare les substances nocives ionisées et l'air pollué, l'unité de collecte présentant un moyen qui crée un brouillard (4) pour faire adhérer les substances nocives ionisées aux gouttelettes de brouillard et un premier séparateur de gouttes (5) disposé en aval dans la direction d'écoulement de l'air pollué et qui sépare les gouttelettes de brouillard chargées en substances nocives, **caractérisé en ce qu'**une unité de refroidissement et/ou de pré-épuration est raccordée en amont de l'unité d'ionisation (2) et **en ce que** l'unité de refroidissement et/ou de pré-épuration présente un deuxième gicleur d'eau (7) qui pulvérise l'eau injectée en un brouillard pulvérisé, ainsi qu'un deuxième séparateur de gouttes (8).

2. Dispositif selon la revendication 1, **caractérisé en ce que** le moyen qui crée un brouillard est un premier gicleur d'eau (4).

3. Dispositif selon la revendication 1, **caractérisé en ce que** l'unité de refroidissement et/ou de pré-épuration présente un échangeur de chaleur.

4. Dispositif selon la revendication 1, **caractérisé en ce que** le premier séparateur de gouttes (5) est un séparateur mécanique.

5. Dispositif selon la revendication 4, **caractérisé en ce que** la limite de séparation du séparateur mécanique est comprise entre 10 et 20 µm.

6. Dispositif selon la revendication 2, **caractérisé en ce que** le gicleur d'eau est un gicleur à deux substances ou à une substance.

7. Dispositif selon la revendication 1, **caractérisé en ce que** le moyen de nébulisation délivre des gouttes de brouillard dont le diamètre moyen est compris entre 10 et 20 µm.

8. Procédé d'épuration d'air pollué chargé en substances nocives dans un dispositif selon les revendications 1 à 7, dans lequel l'air pollué est passé dans une unité d'ionisation (2) pour ioniser les substances nocives contenues dans l'air pollué et dans lequel les substances nocives ionisées sont séparées de l'air pollué dans une unité de collecte (4, 5), l'air pollué étant chargé dans l'unité de collecte (4, 5) d'un brouillard dans lequel les substances nocives ionisées adhèrent aux gouttelettes de brouillard, les gouttelettes de brouillard chargées en substances nocives étant séparées de l'air pollué dans un séparateur de gouttes (5), **caractérisé en ce qu'**avant l'ionisation, l'air pollué est refroidi suffisamment pour que les substances nocives se condensent et **en ce que** l'air pollué est pré-épuré avant l'ionisation.

9. Procédé selon la revendication 8, **caractérisé en ce que** lorsqu'il pénètre dans l'unité d'ionisation (2), l'air pollué chargé en substances nocives a une température à laquelle au moins une partie des substances nocives présente la forme de gouttes et/ou de particules.
